# EUROPÄISCHE PATENTSCHRIFT

(11) **EP 2 553 674 B1**
(45) Veröffentlichungstag und Bekanntmachung des Hinweises auf die Patenterteilung: **08.06.2016**
(21) Anmeldenummer: 11723216.5
(22) Anmeldetag: 30.03.2011
(51) Int. Cl.: G09F 13/04, H05B 37/02

(54) **VERFAHREN ZUR AUSLEUCHTUNG EINES LICHTKASTENS**
METHOD FOR ILLUMINATING A LIGHT BOX
PROCÉDÉ D'ÉCLAIRAGE D'UN CAISSON LUMINEUX

(30) Priorität: 31.03.2010 AT 21310 U
(43) Veröffentlichungstag der Anmeldung: 06.02.2013
(73) Patentinhaber: Tridonic GmbH & Co KG, 6851 Dornbirn (AT); Tridonic AG, 8755 Ennenda (CH)
(72) Erfinder: FENKART, Karl-Heinz, A-6845 Hohenems (AT); HORN, Frank, CH-8765 Engi (CH)
(74) Vertreter: Barth, Alexander
(86) Internationale Anmeldenummer: PCT/AT2011/000156
(87) Internationale Veröffentlichungsnummer: WO 2011/120065

(56) Entgegenhaltungen:
- DE-A1- 4 242 204
- DE-A1- 10 143 486
- DE-A1- 10 319 693
- DE-A1-102004 020 216
- DE-A1-102004 037 653

## Beschreibung

Die Erfindung betrifft ein Verfahren zur Ausleuchtung eines Lichtkastens mit mindestens zwei Leuchtmitteln und Betriebsgeräten dafür gemäss dem Oberbegriff des Anspruchs 1. Darüber hinaus betrifft die vorliegende Erfindung ein Beleuchtungssystem zur Ausleuchtung eines Lichtkastens gemäss dem Oberbegriff des Anspruchs 2.

### Technisches Gebiet und Stand der Technik

Lichtkästen werden heutzutage vor allem für die Werbebeleuchtung eingesetzt. Dabei wurden in jüngster Zeit vermehrt klassische Glühlampen durch Gasentladungslampen ersetzt.

Die DE 4242204 A1 offenbart ein Verfahren und eine Vorrichtung zur Ausleuchtung von Leuchtkästen mit mehrfarbigen Lichtquellen, insbesondere farbigen Leuchtstoffröhren, in farb- und intensitätswechselnder Arbeitsweise. Dabei können die farbigen Lichtquellen mittels Helligkeitssteuergeräten von einer Zentralsteuerung in ihrer Intensität gesteuert werden, beispielsweise nach Programmabläufen in zeitlichen Abläufen und wechselnder Intensität.

### Darstellung der Erfindung

Die Aufgabe der Erfindung ist, das Verfahren zur Ausleuchtung eines Lichtkastens mit Leuchtmittelbetriebsgeräten zu verbessern.

Erfindungsgemäß wird ein Verfahren zur Ausleuchtung eines Lichtkastens, vorzugsweise zur Werbebeleuchtung, mit wenigstens zwei Leuchtmitteln vorgeschlagen, wobei
- zwei Leuchtmittel von jeweils einem Betriebsgerät betrieben werden,
- die Betriebsgeräte über je eine Schnittstelle miteinander verbunden sind
- ein Steuergerät mit den beiden Betriebsgeräten über die Schnittstelle verbunden ist,
- mindestens zwei verschiedene Sensoren mit dem Steuergerät verbunden sind,
- wobei das Steuergerät Steuersignale über die erste Schnittstelle aussendet, die von den mittels der Sensoren erfassten Sensorsignalen abhängig sind, und die Leuchtmittel abhängig von den über die erste Schnittstelle empfangenen Steuersignalen angesteuert werden.

Die Erfindung betrifft auch einen Lichtkasten, vorzugsweise zur Werbebeleuchtung, mit zumindest einer transparenten Frontseite, welcher durch wenigstens zwei Leuchtmittel ausgeleuchtet wird, aufweisend
- wenigstens zwei Leuchtmittel,
- wenigstens zwei Betriebsgeräte zum Betreiben von jeweils einem Leuchtmittel, wobei die Betriebsgeräte jeweils eine erste Schnittstelle aufweisen und die ersten Schnittstellen miteinander und mit einem Steuergerät verbunden sind, wobei zwei verschiedene Sensoren mit dem Steuergerät verbunden sind und die Leuchtmittel durch die Betriebsgeräte abhängig von den über die erste Schnittstelle empfangenen Steuersignalen angesteuert werden.

Erfindungsgemäß wird ein Verfahren zur Ansteuerung von elektronisch gesteuerten Leuchtmittelbetriebsgeräten vorgeschlagen. Typische Beispiele für ein derartiges Leuchtmittelbetriebsgerät sind elektronische Vorschaltgeräte. (EVG) für Gasentladungslampen oder Betriebsgeräte für organische oder anorganische Leuchtdioden.

Erfindungsgemäß wird ein Computersoftware-Programmprodukt offenbart, das ein Verfahren nach einem der vorhergehenden Ansprüche unterstützt, wenn es auf einer Recheneinheit läuft.

Die Erfindung bezieht sich auch auf ein Beleuchtungssystem zur Ansteuerung von elektronisch gesteuerten Leuchtmittelbetriebsgeräten in Lichtkästen, wobei das Beleuchtungssystem ein Steuergerät, wenigstens zwei Leuchtmittelbetriebsgeräte und wenigstens zwei Sensoren aufweist. Die Sensoren sind jeweils mit dem Steuergerät verbunden, und die Leuchtmittelbetriebsgeräte sind ebenfalls mit dem Steuergerät verbunden.

Die Aufgabe der Erfindung wird für eine gattungsgemäße Vorrichtung erfindungsgemäß durch die kennzeichnenden Merkmale des Patentanspruchs 2 und für ein gattungsgemäßes Verfahren erfindungsgemäß dem Anspruch 1 gelöst. Besonders vorteilhafte Ausführungen der Erfindung sind in den Unteransprüchen beschrieben.

### Beschreibung der bevorzugten Ausführungsbeispiele

Weitere Vorteile, Merkmale und Eigenschaften der vorliegenden Erfindung sollen nunmehr Bezug nehmend auf die beiden beigefügten Abbildungen erläutert werden.
Fig. 1 zeigt eine Anordnung von einem erfindungsgemäßen Beleuchtungssystem für einen Lichtkasten
Fig. 2 zeigt einen Querschnitt durch einen Lichtkasten

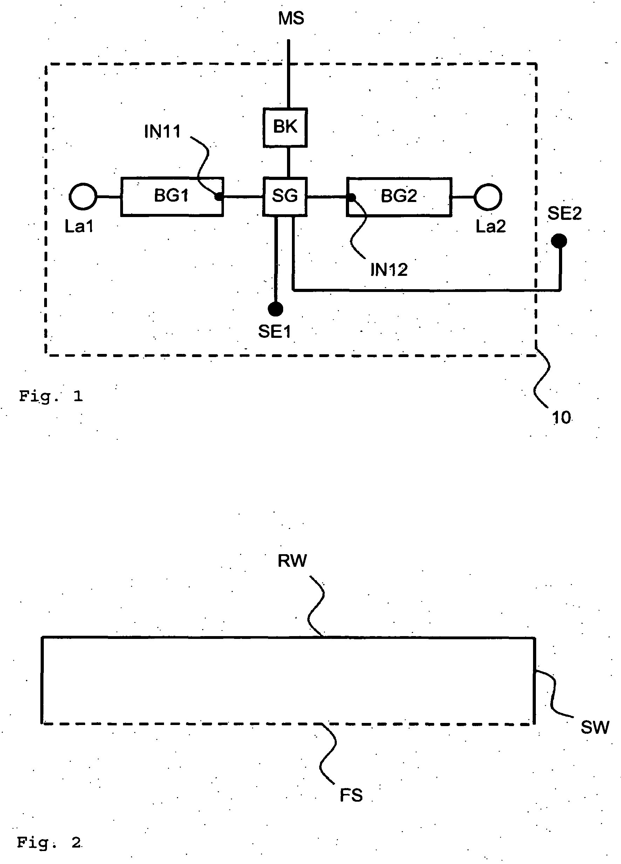

Fig. 1 zeigt in schematischer Darstellung einen Lichtkasten (10) mit der enthaltenen Beleuchtung. Der Lichtkasten (10) weist ein Beleuchtungssystem auf, welches zur Ansteuerung von wenigstens zwei Leuchtmitteln (La1, La2) dient. Dabei sind wenigstens zwei Betriebsgeräte (BG1, BG2) zum Betreiben von jeweils einem Leuchtmittel (La1, La2) vorhanden.

Die Betriebsgeräte (BG1, BG2) weisen jeweils eine erste Schnittstelle (IN11, IN12) auf und die ersten Schnittstellen (IN11, IN12) sind miteinander verbunden. Ein Steuergerät (SG) ist ebenfalls mit den beiden Betriebsgeräten (BG1, BG2) über die Schnittstelle (IN11, IN12) verbunden. Mindestens zwei verschiedene Sensoren (SE1, SE2) sind mit dem Steuergerät (SG) verbunden.
Das Steuergerät (SG) sendet Steuersignale über die erste Schnittstelle (IN11, IN12) aus, die von den mittels der Sensoren erfassten Sensorsignalen abhängig sind, und die Leuchtmittel (La1, La2) werden durch die Betriebsgeräte (BG1, BG2) abhängig von den über die erste Schnittstelle (IN11, IN12) empfangenen Steuersignalen angesteuert.

Die Betriebsgeräte (BG1, BG2) können optional auch Steuersignale über die erste Schnittstelle (IN11, IN12) aussenden. Wie bereits erwähnt, können die Leuchtmittel (La1, La2) durch die Betriebsgeräte (BG1, BG2) abhängig von den über die erste Schnittstelle (IN11, IN12) empfangenen Steuersignalen angesteuert werden.

Bei den Leuchtmitteln (La1, La2) kann es sich prinzipiell um jedes beliebige Leuchtmittel handeln, so beispielsweise um Gasentladungslampen oder um organische bzw. anorganische Leuchtdioden. Die dargestellten Betriebsgeräte (BG1, BG2) verfügen über Anschlüsse, die mit dem Schutzleiter(Erde), dem Phasenleiter und dem Nullleiter zur Energieversorgung des Betriebsgerätes (BG1, BG2) kontaktierbar sind. Das Betriebsgerät (BG1, Bug2) verfügt wie bereits erwähnt über eine erste Schnittstelle (IN11, IN12) mit den Anschlüssen zum Verbinden mit einem Bussystem (wobei dieses Bussystem nicht zwingenderweise durch ein digitales Zweidrahtbussystem gebildet werden muss, sondern beispielsweise auch ein System mit einer Informationsübertragung über die Netzleitung oder über eine drahtlose Kommunikation sein kann).

Die erste Schnittstelle (IN11, IN12) kann so ausgelegt sein, dass über diese Anschlüsse dem Betriebsgerät digitale Befehle bspw. gemäß dem DALI-Standardprotokoll oder dem DSI-Protokoll der Firma Tridonic übermittelt werden können bzw. das Betriebsgerät optional auch Signale abschicken kann. Optional oder alternativ kann die erste Schnittstelle (IN11, IN12) so ausgebildet sein, dass Signale durch die Versorgungsspannung wie beispielsweise der Netzspannung oder auch Tastersignale übermittelt werden können.

Über die erste Schnittstelle (IN11, IN12) kann somit eine unidirektionale oder bidirektionale Kommunikation zwischen dem Steuergerät (SG) und den Betriebsgeräten (BG1, BG2) ermöglicht werden.

Mittels des ersten Sensors (SE1) kann eine Überwachung der Helligkeit innerhalb des Lichtkastens erfolgen und mittels des zweiten Sensors (SE2) kann eine Überwachung der Helligkeit außerhalb des Lichtkastens erfolgen.

Es kann zusätzlich ein Bewegungsmelder an das Steuergerät (SG) angeschlossen sein. So kann beispielsweise auf die Annäherung oder Anwesenheit einer Person reagiert werden und die Helligkeit in dem Lichtkasten bei Erfassung einer Annäherung oder Anwesenheit einer Person erhöht werden.

Das Steuergerät (SG) kann optional eine Auswertung der Tageszeit anhand des Verlaufes der Umgebungshelligkeit durchführen und die Ansteuerung der Betriebsgeräte (BG1, BG2) an die erfasste Tageszeit anpassen.

Der Lichtkasten kann weitere Betriebsgeräte mit zumindest einer ersten Schnittstelle (IN11, IN12) aufweisen.

Das Betriebsgerät (BG1, BG2) kann zusätzlich über eine weitere (zweite) Schnittstelle (IN21, IN22) verfügen (in Fig. 1 nicht dargestellt). An diese weitere (zweite) Schnittstelle (IN21, IN22) kann ein zusätzlicher Sensor (SEB1, SEB2), beispielsweise ein Helligkeitssensor oder ein Bewegungsmelder, angeschlossen werden. Die jeweilige Nutzung bzw. Nutzungsweise dieser weiteren (zweiten) Schnittstelle (IN21, IN22) kann programmierbar sein.

Bei den über die weitere (zweite) Schnittstelle (IN21, IN22) zugeführten Sensorsignalen kann es sich um Signale eines Bewegungsmelders oder eines Helligkeitssensors handeln.

Ein Betriebsgerät (BG1, BG2) kann bei Empfang eines über die erste Schnittstelle (IN11, IN12) übertragenen Signals das Sensorsignal von der weiteren (zweiten) Schnittstelle (IN21, IN22) auswerten. Ein Betriebsgerät (BG1, BG2) kann Wie bereits erläutert bei Empfang eines über die erste Schnittstelle (IN11, IN12) nach Auswertung des Steuersignals das angeschlossene Leuchtmittel (La1, La2) entsprechend ansteuern.

Das Beleuchtungssystem kann auch weitere Betriebsgeräte (BG3, BG4) mit zumindest einer ersten Schnittstelle (IN13, IN14) aufweisen (in Fig. 1 nicht dargestellt). Dabei können auch weitere Betriebsgeräte (BG3) vorhanden sein, die auch über eine zweite Schnittstelle (IN23) verfügen, wobei an diese optional ein weiterer zusätzlicher Sensor (SEB3) angeschlossen sein kann.

Es kann ein Busankoppler (BK) vorhanden sein, der mit den ersten Schnittstellen (IN11, IN12) verbunden ist und eine Schnittstellenankopplung zu einem übergeordneten Steuersystem (MS) ermöglicht.

Es kann aber auch das Steuergerät (SG) direkt eine Schnittstellenankopplung zu einem übergeordneten Steuersystem (MS) ermöglichen.

Über die ersten Schnittstellen (IN11, IN12) können verschiedene Steuersignale übertragen werden, wobei nur ein Teil der übertragenen Steuersignale von dem. Busankoppler (BK) oder dem Steuergerät (SG) an das übergeordnete Steuersystem (MS) weitergegeben wird. Der Busankoppler (BK) kann auch in das Steuergerät (SG) integriert sein. Beispielsweise können DALI Befehle als Steuersignale übertragen werden, die vom Busankoppler (BK) an das übergeordnete Steuersystem weiter gegeben werden. Diese Steuersignale können dabei von dem Busankoppler (BK) direkt als DALI Befehle an das übergeordnete Steuersystem weitergegeben werden, oder aber in ein anderes Protokoll umgewandelt werden und dann an das übergeordnete Steuersystem (MS) weitergegeben werden.

Zusätzlich können als Steuersignale vom DALI Standard abweichende Befehle übertragen werden (beispielsweise nach einem abweichenden Protokoll oder in einem zum DALI Standard erweiterten Protokoll), wobei diese Steuersignale nicht vom Busankoppler (BK) an das übergeordnete Steuersystem (MS) weiter gegeben werden. Somit kann eine lokale Regelung innerhalb des Beleuchtungssystems mit den Betriebsgeräten (BG1, BG2, BG3, BG4) innerhalb des Lichtkastens oder auch innerhalb eines Raumes erfolgen, wobei dies mittels der Überwachung durch die verschiedenen Sensoren (SE1, SE2, SE3) erfolgt, und es können zusätzlich externe Steuerinformationen von dem übergeordneten Steuersystem (MS) empfangen werden, wie beispielsweise Ein- und Ausschaltbefehle, sowie Informationen über den Status des Beleuchtungssystems (wie beispielsweise Fehlermeldungen oder Warnungen) von dem Beleuchtungssystem an das übergeordnete Steuersystem (MS) übermittelt werden.

Bei den Leuchtmitteln kann es um eine organische oder anorganische LED oder um eine Gasentladungslampe (Fluoreszenzlampe, Hochdruckgasentladungslampe) handeln. Es kann sich aber auch um unterschiedliche Leuchtmittel handeln, beispielsweise kann es sich bei einem Leuchtmittel um eine organische oder anorganische LED handeln und bei einem weiteren um eine Gasentladungslampe (Fluoreszenzlampe, Hochdruckgasentladungslampe) handeln.

Die beiden Leuchtmittel sind innerhalb des Lichtkastens angeordnet. Der Lichtkasten kann vorzugsweise zur Werbebeleuchtung dienen und es kann mittels des ersten Sensors (SE1) eine Überwachung innerhalb des Lichtkastens (10) erfolgen und mittels des zweiten Sensors (SE2) eine Überwachung außerhalb des Lichtkastens (10) erfolgen.

Somit kann gemäß der Erfindung eine effiziente Werbebeleuchtung mittels eines Lichtkastens (10) realisiert werden.

In Fig. 2 ist eine Ansicht eines typischen Aufbaus eines Lichtkastens (10) gezeigt (dargestellt ist ein Schnitt durch den Lichtkasten). Dieser Lichtkasten (10) kann eine transparente oder teiltransparente Frontseite (FS) aufweisen. Der Lichtkasten (10) weist vorzugsweise eine reflektierende Rückseite (RW) oder alternativ eine transparente oder teiltransparente Rückseite (RW) auf. Der Lichtkasten (10) kann weiterhin reflektierende Seitenwände (SW) oder transparente Seitenwände (SW) aufweisen. Auch die Seitenwände (10) können auch als teiltransparente Seitenwände (10) ausgebildet sein. Somit ergeben sich bei Anwendung von reflektierenden Seitenteilen (Seitenwände oder Rückseite) Reflektormittel für den Lichtkasten (10).

Weiterhin weist der Lichtkasten (10) wie bereits erläutert zumindest zwei Leuchtmittel (La1, La2) auf, wobei die Leuchtmittel (La1, La2) vorzugsweise so ausgerichtet sind, dass die von den Leuchtmitteln (La1, La2) abgegebenen und von den Reflektormitteln umgelenkten Lichtstrahlen zwischen die Rückseite (RW) und die Frontseite (FS) des Lichtkastens (10) oder auf eine dieser beiden Seiten eingestrahlt werden. Die Frontseite (FS) kann durch eine Diffusorscheibe gebildet werden. Optional können auch die Seitenwände (SW) als teiltransparente Seitenteile, beispielsweise durch eine Diffusorscheibe, ausgebildet sein.

Durch Anwendung des erfindungsgemäßen Verfahrens bzw. des Beleuchtungssystems kann der Lichtkasten (10) in Abhängigkeit von der äußeren Helligkeit (erfasst durch den Sensor SE2) und auch von der aktuellen Helligkeit innerhalb des Lichtkastens (10) (erfasst durch den Sensor SE1) geregelt und optimal eingestellt werden. Somit lässt sich eine sehr energieeffiziente Ausleuchtung eines Lichtkastens (10) erreichen.

Dieses Beispiel für einen erfindungsgemäßen Lichtkasten (10) aufweisend ein erfindungsgemäßes Beleuchtungssystem soll im Folgenden genauer erläutert werden. Das Steuergerät (SG) kann durch die Überwachung des zweiten Sensors (SE2) feststellen, wenn die Umgebungshelligkeit (also die äußere Helligkeit) einen bestimmten Wert unterschreitet. Jetzt kann das Steuergerät (SG) entsprechend der Auswertung des Sensorsignals des zweiten Sensors (SE2) über die erste Schnittstelle (IN11, IN12) ein entsprechendes Steuersignal aussenden und mittels der Betriebsgeräte (BG1, BG2) die Ansteuerung, vorzugsweise die Helligkeit, der angeschlossenen Leuchtmittel (La1, La2) anpassen.

Weiterhin kann das Steuergerät (SG) den aktuellen Wert der Helligkeit innerhalb des Lichtkastens mittels des ersten Sensors (SE1), welcher auch an das Steuergerät (SG) angeschlossen ist, erfassen. Abhängig von der Auswertung der beiden Sensoren (SE1, SE2) kann das Steuergerät (SG) über die erste Schnittstelle (IN11, IN12) entsprechende Steuersignale aussenden und die Betriebsgeräte (BG1, BG2) können dementsprechend die angeschlossenen Leuchtmittel (La1, La2) betreiben, beispielsweise deren Helligkeit anpassen.

Auch die weiteren mit der ersten Schnittstelle (IN13, IN14) über das Bussystem verbundenen Betriebsgeräte (BG3, BG4) können dieses Steuersignal empfangen. Somit empfangen auch alle weiteren Betriebsgeräte (BG3, BG4) dieses Steuersignal über deren erste Schnittstelle (IN13, IN14).

In einer Weiterführung der Erfindung kann das erste Betriebsgerät (BG1) alternativ oder zusätzlich durch Auswertung der empfangenen Steuersignale und vom über die zweite Schnittstelle (IN21) erfassten Sensorsignal auch über die erste Schnittstelle (IN11) ein Steuersignal aussenden. Dieses Steuersignal kann dann vom zweiten Betriebsgerät (BG2) empfangen werden (über die erste Schnittstelle (IN12)) und dieses kann in Reaktion auf das empfangene Steuersignal die Ansteuerung des Leuchtmittels (La2) anpassen.

Je nachdem wie die Parameter und Schwellwerte für die Überwachung der Sensoren (SE1, SE2) ausgelegt sind, kann somit für das Beleuchtungssystem innerhalb des Lichtkastens (10) die Beleuchtung geregelt und optimal eingestellt werden.

Die Abhängigkeit von den erfassten Sensorsignalen kann dabei in verschiedene Richtungen ausgelegt werden und es können verschiedene Betriebsmodi für die einzelnen Leuchtmittel (La1, La2) festgelegt werden.

Wie bereits erwähnt können als zweiter Sensor (SE2) oder weitere Sensoren (SE3) auch ein Bewegungsmelder (beispielsweise ein passiver Infrarotsensor, auch als PIR bezeichnet), ein Helligkeitssensor, ein Infrarotsensor (beispielsweise als Empfänger für eine Fernsteuerung per Infrarot) oder ein Farbsensor (beispielsweise zum Abgleich der Farbtemperatur, des Farbortes oder der ausgestrahlten Wellenlänge) oder ein kombinierter Sensor wie ein Helligkeits- und Bewegungssensor angewendet werden. Bei Anwendung eines Bewegungsmelders als zweiter Sensor (SE2) ist beispielsweise denkbar, dass bei Wahrnehmung einer Bewegung im Umfeld des Lichtkastens (10) (also außerhalb) die Leuchtmittel (La1, La2) entsprechend eingeschaltet oder in ihrer Helligkeit verändert werden können.

Die Überwachung innerhalb des Lichtkastens kann beispielsweise dazu dienen, dass eine Kompensation in Bezug auf Helligkeit und / oder Farbtemperatur (oder auch des Farbortes oder der ausgestrahlten Wellenlänge) infolge von Alterung der Leuchtmittel oder auch aufgrund einer Verschmutzung erfolgen kann, auch eine Helligkeitsschwankung aufgrund von Änderungen der Temperatur kann somit kompensiert werden (beispielsweise eine reduzierte Effizienz von Leuchtstofflampen bei niedrigen Temperaturen, beispielsweise bei Frost).

Bei dem in Fig. 1 dargestellten Beispiel kann das Beleuchtungssystem beispielsweise auch derart ausgelegt sein, dass als erster Sensor (SE1) ein Helligkeitssensor (beispielsweise ein Tageslichtsensor oder eine Photodiode) an das Steuergerät (SG) angeschlossen ist. Der Helligkeitssensor kann also beispielsweise derart angeordnet sein, dass er das Umgebungslicht, also das Tageslicht erfasst Abhängig von dem erfassten Umgebungslicht kann die Helligkeit des Beleuchtungssystems angepasst werden. An das Steuergerät (SG) kann als zweiter Sensor (SE2) ein Bewegungsmelder (beispielsweise ein passiver Infrarotsensor, auch als PIR bezeichnet) angeschlossen sein. Optional kann als dritter Sensor (SE3) beispielsweise ein Infrarotsensor (beispielsweise als Empfänger für eine Fernsteuerung per Infrarot, auch IR Interface genannt) an das Steuergerät (SG) angeschlossen sein (nicht dargestellt in Fig. 1). Dieser Infrarotsensor kann für die Programmierung und Adressvergabe des Beleuchtungssystems sowie für die Vorgabe eines gewünschten Helligkeitswertes genutzt werden.

Es wäre aber auch möglich, dass beispielsweise der Helligkeitssensor als erster Sensor (SE1) die Summe aus künstlichem Licht, welches durch die Leuchtmittel (La1, La2) erzeugt wird, und dem Umgebungslicht zu erfassen, so dass das Beleuchtungssystem entsprechend in seiner Helligkeit angepasst wird. Dabei kann der Helligkeitssensor die Summe aus künstlichem Licht und dem Umgebungslicht erfassen und über die Anpassung des künstlichen Lichts die Helligkeit entsprechend den Vorgaben einstellen.

Es kann ein Regelalgorithmus vorgesehen sein, dass das Steuergerät (SG) die Helligkeit der Leuchtmittel (La1, La2) über entsprechende Steuersignale ändert und die darauffolgende Änderung der Helligkeit durch den Helligkeitssensor erfasst. Abhängig davon ob eine ausreichende Änderung der Helligkeit erfolgt ist, kann diese geänderte Ansteuerung der Leuchtmittel (La1, La2) beibehalten werden oder eine weitere Änderung der Helligkeit der Leuchtmittel (La1, La2) durch Aussenden neuer Steuersignale initiiert werden. Auf diese Weise kann auch der Anteil des künstlichen Lichts und / oder der Anteil des Umgebungslichts bestimmt werden. Dies kann beispielsweise durch eine Änderung der Anteils des künstlichen Lichts erfolgen, wobei während dieser Änderung die vom Helligkeitssensor erfasste Helligkeitsänderung ausgewertet wird und anhand dieser Helligkeitsänderung kann auf den Anteil des künstlichen Lichts und / oder Umgebungslichts geschlossen werden. Es kann dabei die Helligkeitsänderung derart schnell erfolgen, so dass die Änderung der Helligkeit für das menschliche Auge nicht wahrnehmbar ist.

Alternativ kann aber auch eine geringfügige Helligkeitsänderung oder eine sehr langsame Helligkeitsänderung vorgenommen werden, so dass diese Änderung der Helligkeit für das menschliche Auge nicht wahrnehmbar ist oder zumindest nicht als störend empfunden wird. Es kann aber auch das künstliche Licht zumindest kurzzeitig deaktiviert werden (also abgeschaltet) und eine Messung mittels Helligkeitssensor in dieser Abschalt-Phase erfolgen.

Daraufhin kann das künstliche Licht wieder eingeschaltet werden und aus der Differenz der erfassten Helligkeiten kann auf den Anteil von künstliche Licht und Umgebungslicht geschlossen werden. Es kann dabei die Abschaltphase vorzugsweise derart kurz gewählt werden, dass die Änderung der Helligkeit für das menschliche Auge nicht wahrnehmbar ist.

Alternativ könnten aber auch beispielsweise zwei separate Helligkeitssensoren genutzt werden, wobei ein Helligkeitssensor das künstliche Licht erfasst und ein weiterer Helligkeitssensor das Umgebungslicht erfasst. Es somit auch möglich weitere Sensoren wie Helligkeitssensoren an das Steuergerät (SG) anzuschließen.

Da mehrere Betriebsgeräte (BG1, BG2, BG3) vorhanden sein können, die alle über eine erste Schnittstelle (IN11, IN12, IN13) verfügen, kann es vorteilhaft sein, wenn auch mehrere verschiedene einzelne Sensoren (SE1, SE2, SE3) an das Steuergerät (SG) angeschlossen werden, und somit kann auf einfache Weise ein sehr flexibles und leistungsfähiges Beleuchtungssystem für einen Lichtkasten aufgebaut werden.

Somit wird ein Verfahren zur Ausleuchtung eines Lichtkastens, vorzugsweise zur Werbebeleuchtung, mit wenigstens zwei Leuchtmitteln ermöglicht, wobei zwei Leuchtmittel (La1, La2) von jeweils einem Betriebsgerät (BG1, BG2) betrieben werden und die Betriebsgeräte (BG1, BG2) sind über je eine erste Schnittstelle (IN11, IN12) miteinander verbunden.
Ein Steuergerät (SG) ist mit den beiden Betriebsgeräten (BG1, BG2) über die erste Schnittstelle (IN11, IN12) verbunden, wobei mindestens zwei verschiedene Sensoren (SE1, SE2) mit dem Steuergerät (SG) verbunden sind. Das Steuergerät (SG) sendet Steuersignale über die erste Schnittstelle (IN11, IN12) aus, die von den mittels der Sensoren erfassten Sensorsignalen abhängig sind, und die Leuchtmittel (La1, La2) werden abhängig von den über die erste Schnittstelle (IN11, IN12) empfangenen Steuersignalen angesteuert.

Zusammengefasst offenbart die Erfindung eine verbesserte Ausleuchtung eines Lichtkastens (10), die sich dadurch auszeichnet, dass es sich flexibel und dynamisch an unterschiedliche Situationen anpassen kann.
- 10: Lichtkasten
- La1: Leuchtmittel 1
- La2: Leuchtmittel 2
- BG1: Betriebsgerät 1
- BG2: Betriebsgerät 2
- IN11: (erste) Schnittstelle des Betriebsgerätes BG1
- IN12: (erste) Schnittstelle des Betriebsgeräte BG2
- SE1: Sensor 1
- SE2: Sensor 2
- SG: Steuergerät
- BK: Busankoppler
- MS: übergeordnetes Steuersystem

- RW: Rückseite
- SW: Seitenwand
- FS: Frontseite

## Patentansprüche

1. Verfahren zur Ausleuchtung eines Lichtkastens (10), vorzugsweise zur Werbebeleuchtung, mit wenigstens zwei Leuchtmitteln, wobei
- zwei Leuchtmittel (La1, La2) von jeweils einem Betriebsgerät (BG1, BG2) betrieben werden,
- die Betriebsgeräte (BG1, BG2) über je eine Schnittstelle (IN11, IN12) miteinander verbunden sind
- ein Steuergerät (SG) mit den beiden Betriebsgeräten (BG1, BG2) über die Schnittstelle (IN11, IN12) verbunden ist,
- mindestens ein Helligkeitssensor mit dem Steuergerät (SG) verbunden ist,
**gekennzeichnet dadurch, dass**
- das Steuergerät (SG) Steuersignale über die Schnittstelle (IN11, IN12) aussendet, die von den mittels des Helligkeitssensors erfassten
Sensorsignalen abhängig sind, und die Leuchtmittel (La1, La2) abhängig von den über die Schnittstelle (IN11, IN12) empfangenen Steuersignalen angesteuert werden,
wobei der Helligkeitssensor die Summe aus künstlichem Licht, welches durch die Leuchtmittel (La1, La2) erzeugt wird, und dem Umgebungslicht erfasst,
- das künstliche Licht zumindest kurzzeitig deaktiviert wird und eine Messung mittels des Sensors (SE1) in dieser Abschalt-Phase erfolgt,
- aus der Differenz der erfassten Helligkeiten auf den Anteil von künstlichem Licht und dem Umgebungslicht geschlossen wird,
- das Beleuchtungssystem entsprechend den Vorgaben in ihrer Helligkeit angepasst wird.

2. Lichtkasten (10), vorzugsweise zur Werbebeleuchtung, mit zumindest einer transparenten Frontseite (FS), welcher durch wenigstens zwei Leuchtmitteln ausgeleuchtet wird, aufweisend
- wenigstens zwei Leuchtmittel (La1, La2),
- wenigstens zwei Betriebsgeräte (BG1, BG2) zum Betreiben von jeweils einem Leuchtmittel (La1, La2), wobei die Betriebsgeräte (BG1, BG2) jeweils eine Schnittstelle (IN11, IN12) aufweisen und die Schnittstellen (IN11, IN12) miteinander und mit einem Steuergerät (SG) verbunden sind, **gekennzeichnet dadurch, dass** zwei verschiedene Sensoren (SE1, SE2) mit dem Steuergerät (SG) verbunden sind und die Leuchtmittel (La1, La2) durch die Betriebsgeräte (BG1, BG2) abhängig von den über die Schnittstelle (IN11, IN12) empfangenen Steuersignalen angesteuert werden,
- einer der zwei verschiedenen Sensoren (SE1, SE2) als Helligkeitssensor ausgebildet ist,
wobei der Helligkeitssensor die Summe aus künstlichem Licht, welches durch die Leuchtmittel (La1, La2)
erzeugt wird, und dem Umgebungslicht erfasst,
- das Steuergerät dazu ausgelegt, dass künstliche Licht zumindest kurzzeitig deaktiviert wird und eine Messung mittels des Helligkeitssensors in dieser Abschalt-Phase erfolgt, und
- dass aus der Differenz der erfassten Helligkeiten auf den Anteil von künstlichem Licht und dem Umgebungslicht geschlossen wird,
- das Steuergerät (SG) die Helligkeit der Leuchtmittel (La1, La2) entsprechend den Vorgaben ändert.

3. Lichtkasten (10) nach Anspruch 2, **gekennzeichnet dadurch, dass** es sich bei den Sensoren (SE1, SE2) jeweils um Helligkeitssensoren handelt.

4. Lichtkasten (10) nach Anspruch 2 oder 3, **gekennzeichnet dadurch, dass** über die Schnittstelle (IN11, IN12) eine unidirektionale oder bidirektionale Kommunikation zwischen dem Steuergerät (SG) und den Betriebsgeräten (BG1, BG2) ermöglicht wird.

5. Lichtkasten (10) nach einer der Ansprüche 2 bis 4, **gekennzeichnet dadurch, dass** ein Infrarotsensor an das Steuergerät (SG) angeschlossen ist.

6. Lichtkasten (10) nach einer der Ansprüche 2 bis 5, aufweisend weitere Betriebsgeräte (BG3, BG4) mit zumindest einer Schnittstelle (IN13, IN14).

7. Lichtkasten (10) nach einer der Ansprüche 2 bis 6, **gekennzeichnet dadurch, dass** ein Busankoppler (BK) vorhanden ist, der mit den Schnittstellen (IN11, IN12) verbunden ist und eine Schnittstellenankopplung zu einem übergeordnetem Steuersystem (MS) ermöglicht.

8. Lichtkasten (10) nach einer Ansprüche 2 bis 6, **gekennzeichnet dadurch, dass** das Steuergerät (SG) eine Schnittstellenankopplung zu einem übergeordnetem Steuersystem (MS) ermöglicht.

9. Lichtkasten (10) nach Anspruch 7 oder 8, **gekennzeichnet dadurch, dass** über die Schnittstellen (IN11, IN12) verschiedene Steuersignale übertragen werden können, wobei nur ein Teil der übertragenen Steuersignale von dem Busankoppler (BK) oder dem Steuergerät (SG) an das übergeordnete Steuersystem (MS) weitergegeben wird.

10. Lichtkasten (10) nach einem der Ansprüche 2 bis 9, **gekennzeichnet dadurch, dass** sich bei den Leuchtmitteln um eine organische oder anorganische LED oder um eine Gasentladungslampe (Fluoreszenzlampe, Hochdruckgasentladungslampe) handelt.

11. Lichtkasten (10) nach einem der Ansprüche 2 bis 10, **gekennzeichnet dadurch, dass** der Lichtkasten (10) eine reflektierende Rückseite (RW) oder eine transparente Rückseite (RW) aufweist.

12. Lichtkasten (10) nach einem der Ansprüche 2 bis 11, **gekennzeichnet dadurch, dass** der Lichtkasten (10) reflektierende Seitenwände (SW) oder transparente Seitenwände (SW) aufweist.

13. Lichtkasten (10) nach einem der Ansprüche 2 bis 12, **gekennzeichnet dadurch, dass** zusätzlich ein Bewegungsmelder an das Steuergerät (SG) angeschlossen ist.

## Claims

1. Method for illuminating a light box (10), preferably for advertising lighting, with at least two lighting means, wherein
- two lighting means (La1, La2) are operated by an operating device (BG1, BG2), respectively,
- the operating devices (BG1, BG2) are connected with each other via one interface (IN11, IN12), respectively,
- a control device (SG) is connected with the two operating devices (BG1, BG2) via the interface (IN11, IN12),
- at least one brightness sensor is connected with the control device (SG),
**characterized in that**
- the control device (SG) sends control signals via the interface (IN11, IN12) that depend on the sensor signals detected by the brightness sensors, and the lighting means (La1, La2) are actuated dependent on the control signals received via the interface (IN11, IN12),
wherein the brightness sensor detects the sum of artificial light, which is generated by the lighting means (La1, La2), and the ambient light,
- the artificial light is deactivated at least momentarily and measuring takes place by means of the sensor (SE1) in this shut-off phase,
- the proportion of artificial light and ambient light is determined from the difference of the detected brightnesses,
- the lighting system is adapted in its brightness according to the specifications.

2. Light box (10), preferably for advertising lighting, with at least one transparent front face (FS), which is illuminated by at least two lighting means, comprising
- at least two lighting means (La1, La2),
- at least two operating devices (BG1, BG2), for operating one lighting means (La1, La2), respectively, wherein the operating devices (BG1, BG2) have one interface (IN11, IN12), respectively, and the interfaces (IN11, IN12) are connected with one another and with a control device (SG),
**characterized in that**
- two different sensors (SE1, SE2) are connected with the control device (SG) and the lighting means (La1, La2) are actuated by the operating devices (BG1, BG2) dependent on the control signals received via the interface (IN11, IN12),
- one of the two different sensors (SE1, SE2) are configured as brightness sensor,
wherein the brightness sensor detects the sum of artificial light, which is generated by the lighting means (La1, La2), and the ambient light,
- **in that** the control device is designed so that the artificial light is deactivated at least momentarily and measuring takes place by means of the brightness sensor in this shut-off phase, and
- the proportion of artificial light and ambient light is determined from the difference of the detected brightnesses,
- the control device (SG) adapts the brightness of the lighting means (La1, La2) according to the specifications.

3. Light box (10) according to claim 2, **characterized in that** the sensors (SE1, SE2) are brightness sensors, respectively.

4. Light box (10) according to claim 2 or 3, **characterized in that** unidirectional or bidirectional communication between the control device (SG) and the operating devices (BG1, BG2) is enabled via the interface (IN11, IN12).

5. Light box (10) according to one of the claims 2 to 4, **characterized in that** an infrared sensor is connected to the control device (SG).

6. Light box (10) according to one of the claims 2 to 5, having further operating devices (BG3, BG4) with at least one interface (IN13, IN14).

7. Light box (10) according to one of the claims 2 to 6, **characterized in that** a bus coupler (BK), connected with the interfaces (IN11, IN12) and enabling an interface coupling to a superordinate control system (MS), is present.

8. Light box (10) according to one of the claims 2 to 6, **characterized in that** the control device (SG) enables an interface coupling to a superordinate control system (MS).

9. Light box (10) according to claim 7 or 8, **characterized in that** different control signals are able to be transmitted via the interfaces (IN11, IN12), wherein only a part of the transmitted signals is passed on from the bus coupler (BK) or the control device (SG) to the superordinate control system (MS).

10. Light box (10) according to one of the claims 2 to 9, **characterized in that** the lighting means are an organic or inorganic LED or a gas discharge lamp (fluorescent lamp, high pressure gas discharge lamp).

11. Light box (10) according to one of the claims 2 to 10, **characterized in that** the light box (10) has a reflecting rear side (RW) or a transparent rear side (RW) .

12. Light box (10) according to one of the claims 2 to 11, **characterized in that** the light box (10) has reflecting side walls (SW) or transparent side walls (SW) .

13. Light box (10) according to one of the claims 2 to 12, **characterized in that** a motion detector is connected to the control device (SG) in addition.

## Revendications

1. Procédé d'éclairage d'un caisson lumineux (10), de préférence pour l'éclairage publicitaire, comprenant au moins deux moyens d'éclairage, dans lequel
- deux moyens d'éclairage (La1, La2) sont respectivement commandés par un dispositif de fonctionnement (BG1, BG2),
- les dispositifs de fonctionnement (BG1, BG2) sont respectivement reliés l'un à l'autre par une interface (IN11, IN12),
- un dispositif de commande (SG) est relié aux deux dispositifs de fonctionnement (BG1, BG2) par l'interface (IN11, IN12),
- au moins un capteur de luminosité est relié au dispositif de commande (SG),
**caractérisé en ce que**
- le dispositif de commande (SG) envoie des signaux de commande via l'interface (IN11, IN12) qui dépendent des signaux du capteur obtenus par le capteur de luminosité, et les moyens d'éclairage (La1, La2) sont actionnés selon les signaux de commande obtenus via l'interface (IN11, IN12), dans lequel le capteur de luminosité acquiert la somme de la lumière artificielle, étant générée par les moyens d'éclairage (La1, La2), et de l'éclairage ambiant,
- la lumière artificielle est désactivée au moins momentanément et mesurée au moyen du capteur (SE1) lors de cette phase d'extinction,
- le pourcentage de lumière artificielle et d'éclairage ambiant est obtenu à partir de la différence des luminosités acquises,
- le système d'éclairage est adapté dans sa luminosité selon les spécifications.

2. Caisson lumineux (10), de préférence pour l'éclairage publicitaire, doté d'au moins une face frontale transparente (FS), étant éclairée par au moins deux moyens d'éclairage, comprenant
- au moins deux moyens d'éclairage (La1, La2),
- au moins deux dispositifs de fonctionnement (BG1, BG2), destinés à commander, respectivement, un moyen d'éclairage (La1, La2), dans lequel les dispositifs de fonctionnement (BG1, BG2) possèdent respectivement une interface (IN11, IN12), lesdites interfaces (IN11, IN12) étant reliées l'une à l'autre et à un dispositif de commande (SG),
**caractérisé en ce que**
- deux capteurs différents (SE1, SE2) sont reliés au dispositif de commande (SG) et les moyens d'éclairage (La1, La2) sont actionnés par les dispositifs de fonctionnement (BG1, BG2) selon les signaux de commande reçus via l'interface (IN11, IN12),
- un des deux capteurs différents (SE1, SE2) est
configuré comme capteur de luminosité,
dans lequel le capteur de luminosité acquiert la somme de la lumière artificielle, étant générée par les moyens d'éclairage (La1, La2), et de l'éclairage ambiant,
- **en ce que** le dispositif de commande est conçu de sorte que la lumière artificielle soit désactivée au moins momentanément et mesurée au moyen du capteur de luminosité lors de cette phase d'extinction, et
- le pourcentage de lumière artificielle et d'éclairage ambiant est obtenu à partir de la différence des luminosités acquises,
- le dispositif de commande (SG) adapte la luminosité des moyens d'éclairage (La1, La2) selon les spécifications.

3. Caisson lumineux (10) selon la revendication 2, **caractérisé en ce que** les capteurs (SE1, SE2) sont respectivement des capteurs de luminosité.

4. Caisson lumineux (10) selon les revendications 2 ou 3, **caractérisé en ce que** une communication unidirectionnelle ou bidirectionnelle entre le dispositif de commande (SG) et les dispositifs de fonctionnement (BG1, BG2) est activée via l'interface (IN11, IN12).

5. Caisson lumineux (10) selon l'une des revendications de 2 à 4, **caractérisé en ce que** un capteur infrarouge est raccordé au dispositif de commande (SG).

6. Caisson lumineux (10) selon l'une des revendications de 2 à 5, comportant de plus des dispositifs de fonctionnement (BG3, BG4) ayant au moins une interface (IN13, IN14).

7. Caisson lumineux (10) selon l'une des revendications de 2 à 6, caractérisé en la présence d'une travée de couplage (BK) reliée aux interfaces (IN11, IN12) et activant un couplage d'interface à un système de commande superordonné (MS).

8. Caisson lumineux (10) selon l'une des revendications de 2 à 6, **caractérisé en ce que** le dispositif de commande (SG) active un couplage d'interface à un système de commande superordonné (MS).

9. Caisson lumineux (10) selon les revendications 7 ou 8, **caractérisé en ce que** des signaux de commande différents peuvent être transmis via les interfaces (IN11, IN12), dans lequel uniquement une partie des signaux transmis est acheminée de la travée de couplage (BK) ou du dispositif de commande (SG) au système de commande superordonné (MS).

10. Caisson lumineux (10) selon l'une des revendications de 2 à 9, **caractérisé en ce que** les moyens d'éclairage sont une DEL organique ou inorganique ou une lampe à décharge (lampe fluorescente, lampe à décharge haute pression).

11. Caisson lumineux (10) selon l'une des revendications de 2 à 10, **caractérisé en ce que** le caisson lumineux (10) possède un côté postérieur réfléchissant (RW) ou un côté postérieur transparent (RW) .

12. Caisson lumineux (10) selon l'une des revendications de 2 à 11, **caractérisé en ce que** le caisson lumineux (10) possède des cloisons latérales réfléchissantes (RW) ou des cloisons latérales transparentes (RW).

13. Caisson lumineux (10) selon l'une des revendications de 2 à 12, **caractérisé en ce que** un détecteur de mouvement soit de plus relié au dispositif de commande (SG).
